(19) Europäisches Patentamt

European Patent Office

Office européen des brevets

(11) **EP 1 456 068 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(21) Anmeldenummer: **02798251.1**

(22) Anmeldetag: **27.11.2002**

(51) Int Cl.:
*B60T 8/00* (2006.01)   *B62D 6/04* (2006.01)

(86) Internationale Anmeldenummer:
**PCT/DE2002/004359**

(87) Internationale Veröffentlichungsnummer:
**WO 2003/049981 (19.06.2003 Gazette 2003/25)**

(54) **ANORDNUNG UND VERFAHREN ZUR ERMITTLUNG VON KENNGRÖSSEN**

DEVICE AND METHOD FOR DETERMINING PARAMETERS

DISPOSITIF ET PROCEDE POUR DETERMINER DES GRANDEURS NOMINALES

(84) Benannte Vertragsstaaten:
**DE FR**

(30) Priorität: **08.12.2001 DE 10160353**

(43) Veröffentlichungstag der Anmeldung:
**15.09.2004 Patentblatt 2004/38**

(73) Patentinhaber: **ROBERT BOSCH GMBH**
**70442 Stuttgart (DE)**

(72) Erfinder:
• **WETZEL, Gabriel**
  **70435 Stuttgart (DE)**
• **LEIMBACH, Klaus-Dieter**
  **73569 Eschach (DE)**

(56) Entgegenhaltungen:
EP-A- 0 487 967     WO-A-99/67115
DE-A- 2 212 328     DE-A- 4 010 332
DE-A- 4 216 301     DE-A- 4 300 255
DE-A- 4 419 131     DE-A- 19 751 227
US-A1- 2001 003 810

EP 1 456 068 B1

**Beschreibung**

Stand der Technik

Aus der DE 44 19 131 A1 ist eine Erfindung für ein Kraftfahrzeug, vorzugsweise ein Personenkraftfahrzeug mit einer blockiergeschützten hydraulischen Bremsanlage (ABS) bekannt. Um den im allgemeinen bestehenden Zielkonflikt bei herkömmlichen ABS-Systemen zwischen Bremsweg und Fahrstabilität aufzulösen, werden die den Bremsen der einzelnen Fahrzeugräder zugeführten Bremsdrücke völlig unabhängig voneinander und jeweils ausschließlich in Abhängigkeit von der jeweilig erfassten bzw. ermittelten individuellen Blockiergefährdung der einzelnen Fahrzeugräder geregelt, wodurch der an den einzelnen Rädern herrschende Kraftschluß zwischen Fahrbahn und Rad jeweils bestmöglich ausgenutzt und damit ein kürzest möglicher Brems- bzw. Anhalteweg erzielt wird. Hierdurch gegebenenfalls eintretende Tendenzen zur Richtungs- bzw. Fahrinstabilität werden in einfacher Weise durch eine geregelte Lenkeinrichtung kompensiert, bei der einem vom Fahrer durch das Lenkrad gegebenenfalls an sich manuell vorgegebenen Basislenkeinschlag jeweils zwecks Aufrechterhaltung der Fahrstabilität des Fahrzeugs selbsttätig ein z.B. von der jeweiligen Gierwinkelgeschwindigkeit des Fahrzeugs abhängiger Zusatzlenkeinschlag überlagert wird.

Aus der De 197 49 005 A1 ist eine Vorrichtung bzw. ein Verfahren zur Regelung von die Fahrzeugbewegung repräsentierenden Bewegungsgrößen bekannt. Die Vorrichtung enthält 1. Mittel zur Erfassung von die Fahrzeugbewegung repräsentierenden Größen. Die Vorrichtung enthält außerdem wenigstens zwei Regelungsvorrichtungen, die unabhängig voneinander, mit Hilfe geeigneter Aktuatoren, ausgehend von den mit Hilfe der 1. Mittel erfaßten Größen, Regelungseingriffe zur Stabilisierung des Fahrzeuges durchführen. Dabei greift wenigstens eine der Regelungsvorrichtungen in die Lenkung des Fahrzeuges ein. Ferner greift wenigstens eine der Regelungsvorrichtungen in die Bremsen und/oder in den Motor des Fahrzeuges ein, und/oder eine weitere Regelungsvorrichtung greift in die Fahrwerksaktuatoren ein. Außerdem enthält die Vorrichtung 2. Mittel, mit denen ausgehend von den mit den 1. Mitteln erfaßten Größen, Signale und/oder Größen ermittelt werden, mit denen wenigstens eine der wenigstens zwei Regelungsvorrichtungen zumindest zeitweise so beeinflusst wird, daß dadurch das Fahrzeug stabilisiert wird. Dabei führt wenigstens eine der wenigstens zwei Regelungsvorrichtungen solange durch die zweiten Mittel unbeeinflusst Regelungseingriffe zur Stabilisierung des Fahrzeuges durch, bis sie durch die mit Hilfe der zweiten Mittel ermittelten Signale und/oder Größen beeinflusst wird.

Vorteile der Erfindung

Während bei den als Stand der Technik dargelegten Schriften die Aufgabe in einer Regelung von fahrdynamischen Größen besteht, befasst sich die vorliegende Erfindung mit der Ermittlung von die Fahrdynamik eines Kraftfahrzeugs beeinflussenden Größen.

Bei der Erfindung handelt es sich um eine Anordnung sowie ein Verfahren zur Ermittlung von die Fahrdynamik eines Kraftfahrzeugs beeinflussenden Größen bei Nichtvorliegen gefährlicher Fahrzustände,

- wobei die Anordnung wenigstens zwei verschiedene Steuerungs- und/oder Regelungssysteme enthält, mittels derer unabhängig voneinander und fahrerunabhängig mit Hilfe geeigneter Aktuatoren die Fahrdynamik des Fahrzeugs beeinflussende Eingriffe durchgeführt werden können,
- wobei bei Durchführung eines die Fahrdynamik des Fahrzeugs beeinflussenden Eingriffs durch jeweils ein einziges dieser wenigstens zwei verschiedenen Steuerungs- und/oder Regelungssysteme sich jeweils dieselbe die Fahrdynamik beschreibende Größe durch diesen Eingriff ändert und
- wobei wenigstens zwei der die Fahrdynamik beeinflussenden Eingriffe durch zwei dieser verschiedenen Steuerungs- und/oder Regelungssysteme so durchgeführt werden, dass dieselbe die Fahrdynamik beschreibende Größe durch die Eingriffe möglichst wenig und im Idealfall überhaupt nicht verändert wird und
- wobei es sich bei den die Fahrdynamik beeinflussenden Größen um Radlasten und/oder Bremsenkennlinien und/ oder Reifenkennlinien und/oder Lenkungskenngrößen und/oder Haftreibbeiwerte und/oder Notraderkennung handelt.

Dadurch, dass sich die die Fahrdynamik beschreibende Größe möglichst wenig ändert, wird ein hohes Maß an Fahrkomfort beibehalten. Zugleich kommt das Fahrzeug durch die beschriebenen Maßnahmen dadurch nicht in einen gefährlichen Fahrzustand.

Ein vorteilhafte Ausführungsform der Anordnung ist dadurch gekennzeichnet, dass als verschiedene Steuerungs- und/oder Regelungssysteme wenigstens zwei der folgenden Steuerungs- und/oder Regelungssysteme vorgesehen sind, nämlich

- ein in die Bremsen eingreifendes Steuerungs- und/oder Regelungssystem,

- ein in den Motor eingreifendes Steuerungs- und/oder Regelungssystem,
- ein in die Lenkung des Fahrzeugs eingreifendes Steuerungs- und/oder Regelungssystem,
- ein in die Fahrzeugdämpfer eingreifendes Steuerungs- und/oder Regelungssystem und
- ein in die Stabilisatoren eingreifendes Steuerungs- und/oder Regelungssystem.

Weiterhin vorteilhaft ist, wenn die wenigstens zwei die Fahrdynamik beeinflussenden Eingriffe gleichzeitig durchgeführt werden. Der Begriff "gleichzeitig" ist dabei im Sinne von "im wesentlichen gleichzeitig" gemeint, da beispielsweise durch unterschiedliche Schaltzeiten von Aktoren eine exakte Gleichzeitigkeit im mathematischen Sinne nicht erreicht werden kann.

Eine vorteilhafte Ausführungsform ist dadurch gekennzeichnet, dass es sich bei der durch die Eingriffe möglichst wenig und im Idealfall überhaupt nicht veränderten, die Fahrdynamik beschreibenden Größe um eine Größe handelt, deren Änderung einen Einfluß auf die Querdynamik des Fahrzeuges hat.

Eine weitere vorteilhafte Ausführungsform ist dadurch gekennzeichnet, dass es sich bei der durch die Eingriffe möglichst wenig und im Idealfall überhaupt nicht veränderten, die Fahrdynamik beschreibenden Größe um die Gierrate handelt. Ein Gierratensensor ist heute bereits in vielen Fahrzeugen enthalten. Dadurch kann bei der Überprüfung, ob sich die Gierrate verändert hat, ohne wesentlichen Zusatzaufwand auf die Ausgangssignale dieses Sensors zurückgegriffen werden.

Vorteilhaft ist weiterhin, wenn es sich bei den wenigstens zwei verschiedenen Steuerungs- und/oder Regelungssystemen um ein in die Lenkung des Fahrzeugs eingreifendes Steuerungs- und/oder Regelungssystem und ein in die Bremsen des Fahrzeugs eingreifendes Steuerungs- und/oder Regelungssystem handelt. Hierbei ist beispielsweise an eine elektrohydraulische Bremse (EHB) für die Bremseingriffe und an einen Lenksteller für die Lenkeingriffe gedacht. Beide dieser Systeme erlauben sehr präzise Eingriffe, was für die vorliegende Erfindung von Vorteil ist.

Von Vorteil ist, wenn die Eingriffe der wenigstens zwei verschiedenen Steuerungs- und/oder Regelungssysteme nur während einer Geradeausfahrt des Fahrzeugs erfolgen. Dieser Fahrzustand ist fahrdynamisch am einfachsten zu beschreiben und es kann eine Regelung beispielsweise auf die Gierrate Null erfolgen.

Eine vorteilhafte Ausführungsform ist dadurch gekennzeichnet, dass durch die wenigstens zwei verschiedenen Steuerungs- und/oder Regelungssysteme jeweils wenigstens zwei die Fahrdynamik beeinflussende Eingriffe mit abgestufter Intensität durchgeführt werden. Dadurch wird die Ermittlung von Kennlinien ermöglicht.

Zeichnung

Ein Ausführungsbeispiel der Erfindung ist in der folgenden Zeichnung dargestellt. Die Zeichnung besteht aus den Figuren 1 bis 4.

Fig. 1 zeigt links ein Fahrzeug ohne Vorliegen gleichzeitiger Lenk- und Bremseingriffe sowie rechts ein Fahrzeug bei Vorliegen gleichzeitiger Lenk- und Bremseingriffe.
Fig. 2 zeigt das Zusammenwirken des fahrdynamischen Reglers mit dem Fahrzeug und dem Identifikationsblock.
Fig. 3 zeigt den Ablauf des im Identifikationsblock durchgeführten Verfahrens.
Fig. 4 zeigt ein Fahrzeug mit darauf wirkenden Kräften.

Ausführungsbeispiele

Kern des Ausführungsbeispiels ist die aktive Benutzung der Lenkung und der Bremse, um Kenngrößen zu ermitteln. Unter dem Begriff "Kenngrößen" werden dabei beispielsweise die folgenden Größen verstanden:

- Radlasten
- Bremsenkennlinien (Hysterese, Steigung)
- Reifenkennlinien (Seitensteifigkeiten, Längssteifigkeiten)
- Lenkungskenngrößen
- Haftreibbeiwerte

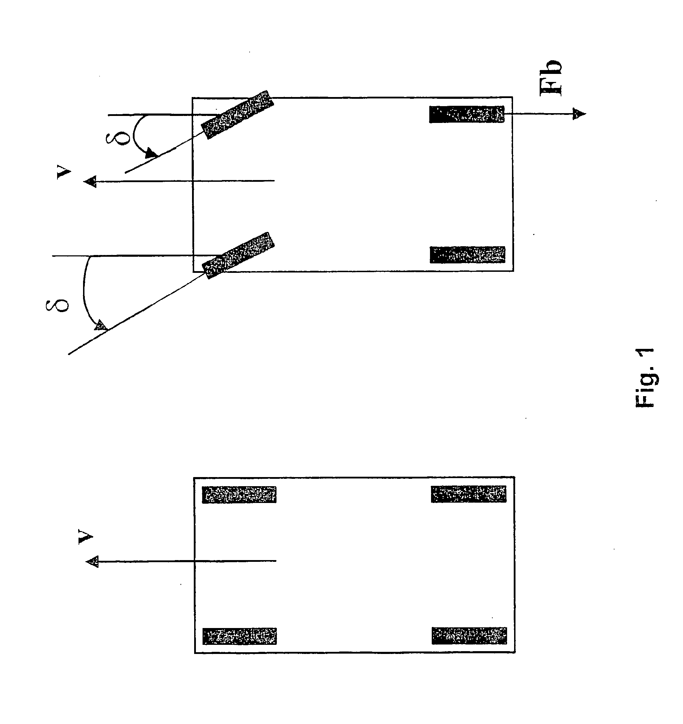

Der Kern der Erfindung besteht darin, dass die Lenk- und Bremseingriffe so gekoppelt werden, dass sie keinen spürbaren Einfluss bzw. keinen wesentlichen Einfluss auf das querdynamische Fahrverhalten haben. Dieses Verfahren wird in Fig. 1 näher erläutert. Links in Fig. 1 ist ein Fahrzeug ohne Brems- und Lenkeingriffe dargestellt, rechts ist ein Fahrzeug mit gezielten Brems- und Lenkeingriffen dargestellt. Die schwarz ausgefüllten Blöcke stellen die Räder des Fahrzeugs dar. Das Fahrzeug soll in beiden Fällen einer bestimmten Fahrtrichtung mit der Geschwindigkeit v folgen, die dem Fahrerwunsch entspricht. Diese Fahrtrichtung sei in Fig. 1 jeweils durch den senkrechten Pfeil nach oben dargestellt.

Nun führe man für das rechte Fahrzeug in Fig. 1 die folgenden drei Gedankenexperimente durch:

1. Es erfolge lediglich ein Lenkeingriff, welcher die beiden Vorderräder nach links dreht (der Lenkwinkel sei $\delta$, wie in Fig. 1 dargestellt). Es findet kein Bremseingriff statt. Es tritt nun ein Giermoment MpsiL auf, welches das Fahrzeug nach links dreht. Als Folge fährt das Fahrzeug eine Linkskurve.

2. Es erfolge lediglich ein Bremseingriff am rechten Hinterrad (mit der Bremskraft Fb, wie dargestellt), aber es finde kein Lenkeingriff statt. Als Folge führt das Fahrzeug eine Gierbewegung um das rechte Hinterrad aus, durch welche sich das Fahrzeug nach rechts dreht. Das Giermoment sei MpsiR.

3. Nun werden sowohl der erwähnte Lenkeingriff als auch der erwähnte Bremseingriff zeitgleich durchgeführt. Damit treten zwei konkurrierende Effekte auf, welche das Fahrzeug sowohl nach links als auch nach rechts lenken wollen. Es ist möglich, die Intensität des Lenkeingriffes (beispielsweise über den Lenkwinkel $\delta$ messbar) und die Intensität des Bremseingriffs (bei hydraulischen oder elektrohydraulischen Bremsen (EHB) beispielsweise über den Druck im Radbremszylinder des rechten Hinterrads messbar, bei elektromechanischen Bremsen (EMB) beispielsweise über den Strom messbar) so zu wählen, dass sich die beiden konkurrierenden Effekte gegenseitig aufheben und das Fahrzeug geradeaus weiterfährt. Das bedeutet, dass die Giermomente MpsiL und MpsiR betragsmäßig gleich sind, aber unterschiedliche Vorzeichen haben. Damit heben sich die Giermomente gegenseitig auf und das Fahrzeug fährt geradeaus weiter. Das drückt sich mathematisch durch Mpsi = MpsiR + MpsiL = 0 aus. Beim Giermoment Mpsi handelt es sich um ein Drehmoment mit der Dimension Nm.

Genaue und präzise dosierte Bremseingriffe sind beispielsweise mit einer elektrohydraulischen Bremse (EHB) möglich, genaue und präzise dosierte Lenkeingriffe sind beispielsweise mit einem FLS-Lenksteller möglich (FLS = fahrdynamisches Lenksystem). Da durch die Kombination der beiden Eingriffe kein spürbarer Einfluß auf das querdynamische Fahrverhalten erfolgt, wird der Fahrkomfort durch ein solches Verfahren nicht verschlechtert. Auch wird dadurch ein Sicherheitsrisiko durch eine auftretende Seitenbewegung des Fahrzeugs vermieden.

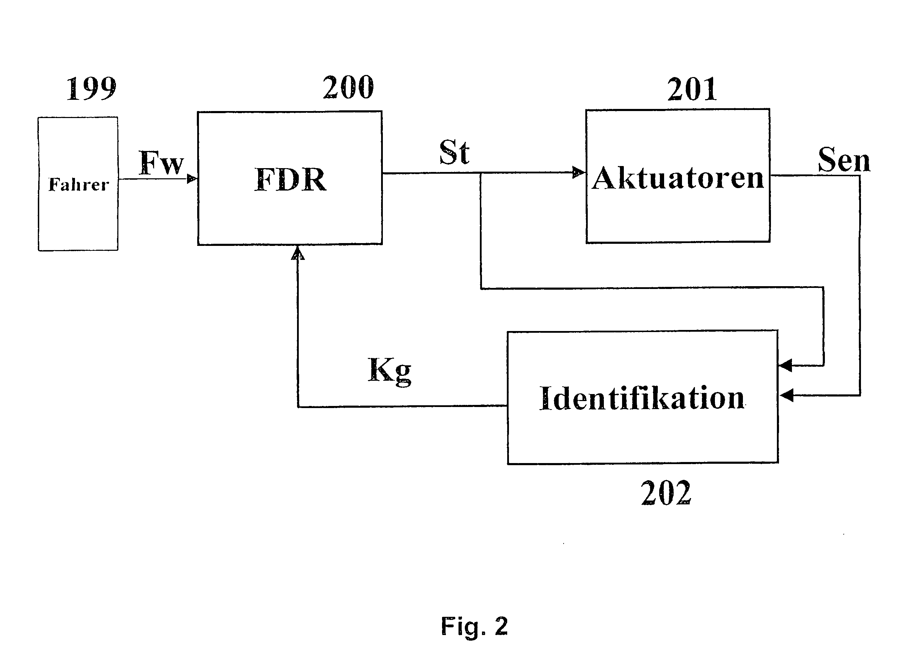

Die Einbettung der Vorrichtung zur Identifikation der Kenngrößen in das System bestehend aus fahrdynamischem Regler und Kraftfahrzeug ist in Fig. 2 dargestellt.

Dabei werden die folgenden Symbole und Blöcke verwendet:

|     |     |
| --- | --- |
|     | den Fahrerwunsch beschreibende Größen, |
| **St =** | Stellgrößen, |
| Sen = | Sensorsignale und |
| Kg = | Kenngrößen. |
| 199 = | Fahrer |
| 200 = | fahrdynamischer Regler |
| 201 = | Fahrzeug (einschließlich Sensoren und Aktuatoren) |
| 202 = | Kenngrößen-Identifikationsblock |

Der topologische Aufbau von Fig. 2 ist der folgende:

- Block 199 liefert die Größen Fw an Block 200.

- Block 200 liefert die Größen St an die Blöcke 201 und 202

- Block 201 liefert die Größen Sen an Block 202

- Block 202 liefert die Größe Kg an Block 200

Im folgenden werden die in Fig. 2 enthaltenen Blöcke detaillierter beschrieben:

- Block 199 repräsentiert den Fahrer des Fahrzeugs. Dieser stellt die den Fahrerwunsch beschreibenden Größen Fw zur Verfügung. Darunter sind Größen wie beispielsweise die Lenkradstellung, die Bremspedalstellung, die Gaspedalstellung sowie die zeitlichen Änderungen dieser Größen zu verstehen.
- Block 200 ist fahrdynamischer Regler, dabei kann es sich beispielsweise um ein Fahrdynamikregelungssystem (FDR = Fahrdynamikregelung, ESP = "electronic stability program"), um eine Antriebsschlupfregelung (ASR) oder ein Antiblockiersystem (ABS) handeln. Als für die Erfindung bedeutende Eingangsgrößen stehen der Fahrerwunsch Fw sowie die Kenngrößen Kg zur Verfügung.
- Block 201 repräsentiert das Fahrzeug, welches auf die von Block 200 kommenden Stellgrößen reagiert. Diese Reaktion äußert sich beispielsweise in der Betätigung von im Fahrzeug befindlichen Aktuatoren (Bremsen, Motorsteuerung, Lenkeingriff) und daraufhin in der geometrischen Gestalt der vom Fahrzeug gefahrenen Bahnkurve. Block 201 erhält als Eingangssignale die Stellgrößen. Die Ausgangssignale von Block 201 sind Sensorsignale Sen. Diese werden von Sensoren, welche am Fahrzeug befestigt sein können, geliefert. Hier ist durchaus denkbar, nicht am Fahrzeug befestigte Sensoren mit einzubeziehen, welche Informationen über das Fahrzeug (z.B. Standort, Geschwindigkeit) liefern. Im Block 201 sind auch die zum Fahrzeug gehörende Sensorik (Bremsdruck, Lenkwinkel, Gierrate,...) und Aktorik (Bremsen, Lenkung,...) enthalten.

- Block 202 ist der Identifikationsblock. In diesem Block werden die Kenngrößen berechnet, welche dann dem fahrdynmischen Regler zugeführt werden. Als Eingangssignale erhält der Identifikationsblock Stellgrößen und Sensorsignale.

In Block 201 stehen beispielsweise Sensoren für die Erfassung der folgenden Größen zur Verfügung:

- Bremsdruck der einzelnen Radbremszylinder bzw. Druck im Bremskreis bzw. Bremsstrom bei der elektromechanischen Bremse (EMB)
- Lenkwinkel
- Gierrate
- Querbeschleunigung
- Raddrehzahlen bzw. Radgeschwindigkeiten

Die durch die Sensoren gemessenen Größen sind in Fig. 2 als Sensorsignale Sen bezeichnet. Neben den Sensorsignalen treten in Fig. 2 noch die Stellgrößen St sowie die Kenngrößen Kg auf.

Unter Stellgrößen werden dabei diejenigen Größen verstanden, welche vom fahrdynamischen Regler 200 eingeregelt werden. Beispiele dafür sind der elektrische Strom durch eine elektrische Lenkvorrichtung bzw. einen elektrischen Lenksteller oder der Bremsdruck in den einzelnen Radbremszylindern. Diese Größen werden nicht direkt durch Sensoren erfasst, sondern im fahrdynamischen Regler 200 berechnet. Mit diesen Stellgrößen werden die im Fahrzeug befindlichen Steller und Aktuatoren beeinflusst.

Im Block 202 werden die Kenngrößen identifiziert. Es ist möglich, zwischen Fahrzeugkenngrößen und Umweltkenngrößen zu unterscheiden. Bei den Fahrzeugkenngrößen kann es sich beispielsweise um Radlasten, Bremsenkennlinien (Hysterese, Steilheit), Reifenkennlinien, Notraderkennung oder Lenkungskenngrößen handeln. Bei den Umweltkenngrößen kann es sich beispielsweise um die Haftreibbeiwerte zwischen Reifen und Straße handeln.

Die aktuelle Identifikation der Kenngrößen in Block 202 basiert auf dem Vergleich zwischen den verfügbaren Signalen (Stellgrößen, Sensorsignale) und den mit einem internen Modell in Block 202 geschätzten Werten. Durch diesen Vergleich werden die gesuchten Kenngrößen identifiziert, damit sie für den nächsten Rechenschritt im fahrdynamischen Regler 200 und im Modell in Block 202 bereitstehen. Um die Identifikation durchführen zu können, müssen die Stellgrößen und/oder die Sensorsignale häufig von Null verschieden sein. Dies ist eine ganz wesentliche Einschränkung, welche die Leistungsfähigkeit fahrdynamischer Regler stark beeinflussen kann. Beispielsweise können in bestimmten Fahrzuständen wie einem freirollenden Fahrzeug die fahrdynamischen Regler gewisse Kenngrößen nicht schätzen.

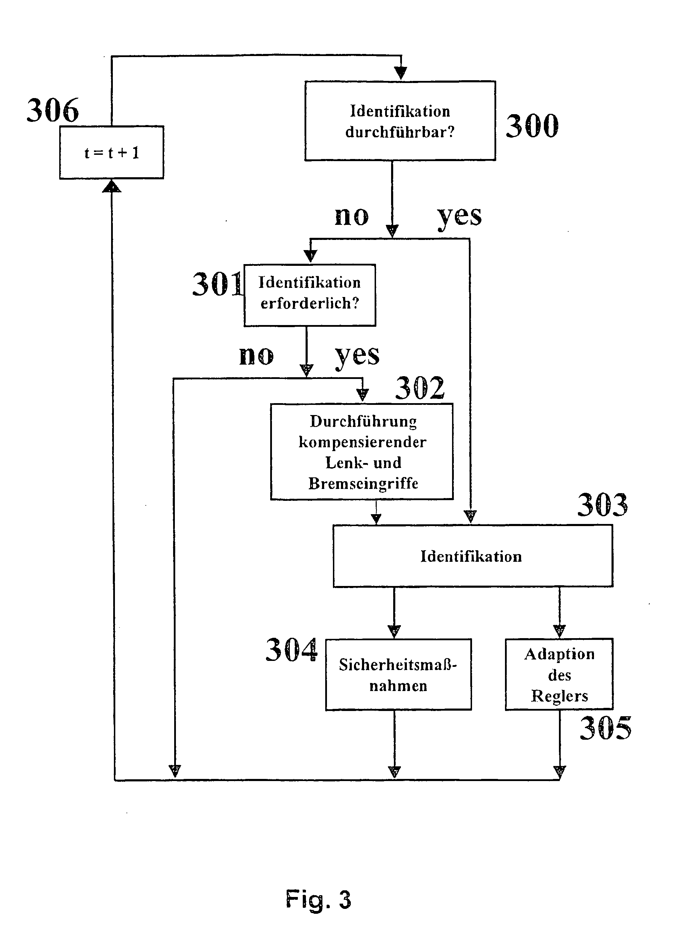

Das Verfahren zur Identifikation von Kenngrößen ist in Fig. 3 dargestellt.
Dabei haben die einzelnen Blöcke die folgende Bedeutung:

Block 300: Abfrage, ob eine Identifikation von Kenngrößen mit den aktuell vorliegenden Stellgrößen überhaupt durchführbar ist.
Block 301: Abfrage, ob eine Identifikation überhaupt erforderlich ist.
Block 302: Durchführung sich gegenseitig kompensierender Lenk- und Bremseingriffe.
Block 303: Identifikation der Kenngrößen
Block 304: Durchführung von Sicherheitsmaßnahmen
Block 305: Adaption des Reglers
Block 306: Zeitinkrementation t = t+1

Der topologische Aufbau von Fig. 3 ist der folgende:

- In Block 300 findet eine Abfrage statt, ob eine Identifikation durchführbar ist. Lautet die Anwort "ja" (als "yes" in Fig. 3 eingezeichnet), dann wird zu Block 303 weitergegangen. Lautet die Antwort "nein" (als "no" in Fig. 3 eingezeichnet), dann wird zu Block 301 weiterverzweigt.
- In Block 301 findet eine weitere Abfrage statt, ob eine Identifikation erforderlich ist. Lautet die Anwort "ja" (als "yes" in Fig. 3 eingezeichnet), dann wird zu Block 302 weitergegangen. Lautet die Antwort "nein" (als "no" in Fig. 3 eingezeichnet), dann wird zu Block 306 weiterverzweigt.

- Die Ausgangssignale von Block 303 werden an die Blöcke 304 und 305 weitergereicht.
- Die Ausgangssignale von Block 302 werden an Block 303 weitergereicht.
- Die Ausgangssignale der Blöcke 304 und 305 werden an Block 306 weitergereicht.
- Die Ausgangssignale von Block 306 werden an Block 300 weitergereicht.

Nun wird der Aufbau von Fig. 3 im Detail erläutert.
In Block 300 wird festgestellt, ob die Identifikation der Kenngrößen mit den momentan vorliegenden Stellgrößen (z.B. dem momentanen Lenkwinkel oder dem momentanen Bremsdruck) durchführbar ist. Ist die Identifikation durchführbar, dann wird sie in Block 303 durchgeführt. Ist die Identifikation momentan nicht durchführbar, dann wird in Block 301 festgestellt, ob eine Identifikation zum momentanen Zeitpunkt überhaupt erforderlich ist. Ist zum momentanen Zeitpunkt eine Identifikation nicht erforderlich, dann wird zu einem späteren Zeitpunkt erneut in Block 300 gestartet. Dies ist durch die Block 306 durchgeführten Zeitinkrementierung (t = t+1) dargestellt. Ist eine Identifikation zum momentanen Zeitpunkt dagegen erforderlich, dann erfolgt in Block 302 eine Einstellung kompensierender Lenk- und Bremseingriffe. Dabei sind diese Eingriffe (und damit die ihnen zugrunde liegenden Stellgrößen) so gekopppelt, dass der Fahrer keinen oder nur einen geringen Einfluss spürt. Anschließend erfolgt in Block 303 die Identifikation der Kenngrößen. Nach erfolgter Identifikation können entweder in Block 304 Sicherheitsmaßnahmen eingeleitet werden (ein Beispiel hierfür ist die Identifikation eines Reifendruckverlustes, als Sicherheitsmaßnahme kommt dann beispielsweise eine Beschränkung der maximalen Fahrzeuggeschwindigkeit in Frage) und/oder es findet in Block 305 eine Adaption des fahrdynamischen Reglers 200 statt. Unter der Adaption des fahrdynamischen Reglers ist beispielsweise zu verstehen, dass die in diesem implementierten Modelle oder Kennlinien an die aktuell ermittelten Kenngrößen angepasst werden. Nach Durchführung der Sicherheitsmaßnahmen (Block 304) oder der Adaption des Reglers (Block 305) findet in Block 306 eine Zeitinkrementation statt und danach beginnt in Block 300 eine erneute Überprüfung, ob eine Identifikation der Kenngrößen mit den aktuellen Stellgrößen durchführbar ist.
Das Ausführungsbeispiel soll im folgenden noch weiter konkretisiert werden. Das Giermoment Mpsi lässt sich allgemein in Abhängigkeit bzw. als Funktion f1 der auf das Fahrzeug wirkenden Längskräfte FL und der auf das Fahrzeug wirkenden Seitenkraft FS ausdrücken:

$$\mathrm{Mpsi\ =\ f1(FL,\ FS).}$$

Da das Giermoment Mpsi eng mit der auftretenden Gierrate psi verknüpft ist (im wesentlichen die Newtonsche Bewegungsgleichung), kann damit auch die auftretende Gierrate psi als Funktion von FL und FS ausgedrückt werden.
Beim Beispiel nach Fig.1 werden die vorderen Räder leicht gelenkt, d.h. es treten Seitenkräfte an den vorderen Rädern auf. Diese hängen vom Reibbeiwert $\mu$ zwischen Reifen und Fahrbahn, dem Lenkwinkel $\delta$ und den an diesen Rädern wirkenden Normalkräften (= Radaufstandskräften) Fnvl und Fnvr (Fnvr = Normalkraft vorne rechts, Fnvl = Normalkraft vorne links) ab:

$$\mathrm{FS\ =\ f2(\mu,\delta,Fnvr,Fnvl).}$$

Das rechte Hinterrad wird gebremst. Die Bremskraft hängt vom Bremsdruck pB an diesem Rad, vom Reibbeiwert $\mu$ und der Radaufstandskraft Fnhr (= Normalkraft hinten rechts) ab:

$$\mathrm{FL\ =\ f3(\mu,\ pB,\ Fnhr).}$$

Nun werden die folgenden Überlegungen angestellt:

- Es ist nun möglich, die Gierrate psi als Funktion von $\mu$, $\delta$, Fnvr, Fnvl, pB und Fnhr auszudrücken:

$$\mathrm{psi\ =\ f4(\mu,\ \delta,\ Fnvr,\ Fnvl,\ pB,\ Fnhr)} \qquad (1)$$

- Dies ist eine zusätzliche Gleichung. Das bedeutet, bei Kenntnis von psi kann aus dieser Gleichung beispielsweise der Reibbeiwert $\mu$ ermittelt werden. Aus dieser Gleichung können auch der Radbremsdruck pB, der Lenkwinkel $\delta$ oder sogar die Normalkräfte ermittelt werden.
- Ist allerdings die Gierrate psi von Null verschieden, dann ist das mit beeinträchtigtem Fahrkomfort oder sogar mit einem Sicherheitsrisiko für das Fahrzeug und den Fahrer verbunden (vom Fahrer nicht gewollte Seitwärtsbewegung des Fahrzeugs).

- Durch die beschriebene Erfindung gelingt es, die Gierrate psi = 0 zu erreichen, wobei gleichzeitig ein von Null verschiedener Radbremsdruck und ein von Null verschiedener Lenkwinkel vorliegen. Damit wird eine Identifikation von Größen durch eine zusätzliche Gleichung ohne eine Beeinträchtigung von Fahrkomfort oder Fahrsicherheit ermöglicht.

Das Ziel der Erreichung einer Gierrate psi = 0 ist insbesondere im Falle einer Geradeausfahrt sinnvoll. Das bedeutet, dass auch während der Durchführung der Lenk- und Bremseingriffe das Fahrzeug weiterhin geradeaus fährt. Im Fall einer Kurvenfahrt können die Lenk- und Bremseingriffe so dosiert werden, dass die Gierrate psi konstant bleibt.

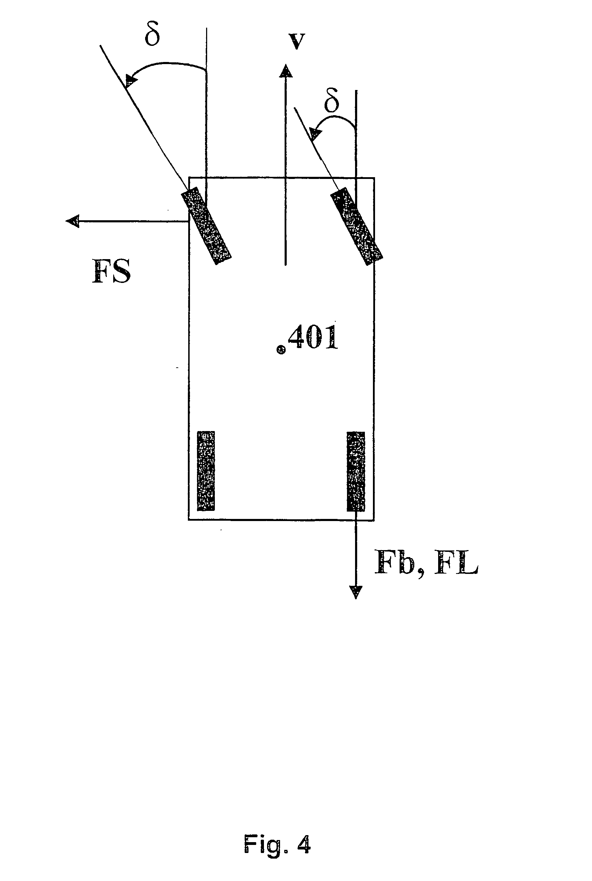

In Fig. 4 ist dieser Sachverhalt nochmals graphisch dargestellt. Dabei sei der Schwerpunkt in der Mitte des Fahrzeugs durch 401 gekennzeichnet. Durch die Lenkung der Vorderräder wirkt eine Kraft FS nach links. Diese Kraft möchte das Fahrzeug nach links um den Schwerpunkt herum drehen. Am rechten Hinterrad wirkt die Bremskraft Fb bzw. die Längskraft FL nach hinten. Diese Kraft möchte das Fahrzeug um den Schwerpunkt herum nach rechts drehen. Sind die durch diese Kräfte ausgeübten Drehmomente im Gleichgewicht, dann findet keine Drehbewegung des Fahrzeugs um den Schwerpunkt herum und damit keine Gierbewegung statt. Die Gierrate psi ist Null. Es liegt zwar ein geringfügiger (bremsender) Einfluss auf die Längsbewegung des Fahrzeugs vor, dieser stellt jedoch kein Sicherheitsrisiko dar. Zudem läßt sich dieser bremsende Einfluß durch eine Erhöhung des Motormoments ausgleichen.

Noch ein weiterer Punkt soll an dieser Stelle bemerkt werden. Für den Lenkwinkel können verschiedene Werte gewählt werden. Beispielsweise kann mit einem Lenkwinkel von 1 Grad begonnen werden, kurz darauf wird der Lenkwinkel auf 2 Grad erhöht, usw.... Das bedeutet, es wird eine Sequenz von verschiedenen Lenkwinkeln appliziert. Parallel dazu wird am rechten Hinterrad eine Sequenz von verschiedenen Bremsdrücken bzw. Bremskräften appliziert, denn es muss ja stets eine Kompensation des Giermoments (und damit eine verschwindende Gierrate) auftreten. Damit werden in die Gleichung psi = 0 bei jedem Punkt dieser Sequenz neue Zahlenwerte für den Lenkwinkel und den Bremsdruck eingesetzt, man erhält eine Sequenz von Gleichungen.

Eine weitere Konkretisierung betrifft die Achslastverteilung in Fahrzeuglängsrichtung. In einer einfachen Näherung ergibt sich die Radaufstandskraft Fnij für das Rad ij durch die Beziehung

Fnij = m * (statische Achslastverteilung bzgl. Rad ij) * (dynamische Achslastverteilung bzgl. Rad ij) . Als allgemeiner Zusammenhang gilt

Fnij = f5(m, statische Achslastverteilung, dynamische Achslastverteilung)

Dabei gehen in die statische Achslastverteilung der Achsabstand in Längsrichtung sowie die Achsabstände vom Fahrzeugschwerpunkt ein, in die dynamische Achslastverteilung gehen beispielsweise Lastwechsel bei Bremsvorgängen ein. m ist die Fahrzeugmasse.

Werden ermittelte Radaufstandskräfte in die obige Formel (1) für die Größen Fnvl, Fnvr und Fnhr eingesetzt, dann wird damit aus der Beziehung psi = 0 beispielsweise eine Berechnung der Masse m ermöglicht.

Eine weitere Konkretisierung betrifft die Ermittlung einer Bremsenkennlinie. Das Bremsmoment M sei mit dem Bremsdruck pB über die Funktion f6 verknüpft: M = f6(pB). Als einfache lineare Näherung kann sogar M = c * pB angenommen werden. Die zusätzliche Gleichung psi = 0 (Gleichung 1) kann nun dazu verwendet werden, um die Konstante c oder sogar die Funktion f6 zu ermitteln. Dazu kann beispielsweise die Funktion f6 durch ein Polynom mit N unbekannten Koeffizienten approximiert werden. Wird nun eine Sequenz mit N verschiedenen Lenkwinkeln (und natürlich den zugehörigen Bremskräften) durchfahren, dann können durch Auswertung der N erhaltenen Gleichungen die N unbekannten Koeffizienten bestimmt werden. Auch eine Berücksichtigung von Hysterese-Verhalten ist denkbar.

Auch die Ermittlung von Reifenkennlinien wird durch die zusätzliche Gleichung erleichtert. Dazu werden die auf die Reifen wirkenden Längs- und Seitenkräfte durch Formeln mit noch zu bestimmenden Parametern ersetzt. Durch die zusätzliche Gleichung kann wenigstens einer dieser Parameter ermittelt werden. Auch mehrere Parameter können mit dieser Methode ermittelt werden. Dazu werden beispielsweise verschiedene Lenkwinkel δ eingestellt, diese werden durch unterschiedliche Bremskräfte kompensiert, so daß sich N verschiedene Fahrzustände jeweils mit psi = 0 ergeben. Dadurch erhält man N verschiedene Gleichungen (jeweils psi = 0), welche zur Identifikation von N Parametern verwendet werden können (das entspricht in der Mathematik einem Gleichungssystem von N Gleichungen mit N Unbekannten). Bei diesem Verfahren werden damit Lenkwinkel und Bremseingriffe mit jeweils abgestufter Intensität durchgeführt.

Auch Haftreibbeiwerte können mit diesem Verfahren ermittelt werden. Dazu werden die Längskraft und die Seitenkraft auf einen Reifen jeweils als Funktion des Haftreibbeiwertes dargestellt. Die unbekannten Koeffizienten in diesen Gleichungen werden analog wie bei der Ermittlung der Reifenkennlinien mit diesem Verfahren identifiziert.

Die Identifikation der Kenngrößen führt zu zwei wesentlichen Vorteilen:

1. Die Genauigkeit der Reglereingriffe wird durch die bessere Adaption des fahrdynamischen Reglers erhöht.
2. Es können regelmäßige Sicherheitsüberprüfungen durchgeführt werden, um beispielsweise sicherzustellen, dass die Aktuatoren richtig funktionieren.

Um den Einfluss der Bremseingriffe auf die Längsdynamik des Fahrzeugs zu reduzieren, ist auch die gleichzeitige Durchführung von aktiven Motoreingriffen denkbar. Das bedeutet beispielsweise, dass gleichzeitig eine Erhöhung des Motormoments stattfindet.

Anstelle der beschriebenen gleichzeitigen Durchführung von Brems- und Lenkeingriffen (und möglicherweise noch Motoreingriffen) ist es auch möglich, sich für die Ermittlung von Bremsengrößen auf die Brems- und Motoreingriffe einzuschränken. Beispielsweise kann bei den nicht angetriebenen Rädern gebremst werden, während bei den angetriebenen Rädern das Motormoment erhöht wird. Auch hier ist eine Kompensation der Einflüsse dieser beiden Maßnahmen auf die Längsdynamik des Fahrzeugs möglich.

Das gesamte Prinzip, welches hier für die Lenkung und die Bremse dargestellt wurde, kann auch für andere aktive Steller, beispielsweise Stabilisatoren oder Dämpfer, verwendet werden.

Eine Durchführung des beschriebenen Verfahrens bietet sich beispielsweise an, wenn als Fahrzustand eine Geradeausfahrt des Fahrzeugs vorliegt.

**Patentansprüche**

1. Anordnung zur Ermittlung von die Fahrdynamik eines Kraftfahrzeugs beeinflussenden Größen, derart ausgebildet, dass diese Größen bei Nichtvorliegen gefährlicher Fahrzustände ermittelt werden,

   - wobei die Anordnung wenigstens zwei verschiedene Steuerungs- und/oder Regelungssysteme enthält, mittels derer unabhängig voneinander und fahrerunabhängig mit Hilfe geeigneter Aktuatoren die Fahrdynamik des Fahrzeugs beeinflussende Eingriffe (302) durchgeführt werden können,
   - wobei bei Durchführung eines die Fahrdynamik des Fahrzeugs beeinflussenden Eingriffs (302) durch jeweils ein einziges dieser wenigstens zwei verschiedenen Steuerungs- und/oder Regelungssysteme sich jeweils dieselbe die Fahrdynamik beschreibende Größe (psi) durch diesen Eingriff ändert und
   - wobei wenigstens zwei der die Fahrdynamik beeinflussenden Eingriffe durch zwei dieser verschiedenen Steuerungs- und/oder Regelungssysteme so durchgeführt werden, dass dieselbe die Fahrdynamik beschreibende Größe (psi) durch die Eingriffe möglichst wenig und im Idealfall überhaupt nicht verändert wird und
   - wobei es sich bei den die Fahrdynamik beeinflussenden Größen um Radlasten und/oder Bremsenkennlinien und/oder Reifenkennlinien und/oder Lenkungskeringrößen und/oder Haftreibbeiwerte und/oder Notraderkennung handelt.

2. Anordnung nach Anspruch 1, **dadurch gekennzeichnet, dass** als verschiedene Steuerungs- und/oder Regelungssysteme wenigstens zwei der folgenden Steuerungs- und/oder Regelungssysteme vorgesehen sind, nämlich

   - ein in die Bremsen eingreifendes Steuerungs- und/oder Regelungssystem,
   - ein in den Motor eingreifendes Steuerungs- und/oder Regelungssystem,
   - ein in die Lenkung des Fahrzeugs eingreifendes Steuerungs- und/oder Regelungssystem,
   - ein in die Fahrzeugdämpfer eingreifendes Steuerungs- und/oder Regelungssystem und
   - ein in die Stabilisatoren eingreifendes Steuerungs- und/oder Regelungssystem.

3. Anordnung nach Anspruch 1, **dadurch gekennzeichnet, dass** die wenigstens zwei die Fahrdynamik beeinflussenden Eingriffe gleichzeitig durchgeführt werden.

4. Anordnung nach Anspruch 1, **dadurch gekennzeichnet, dass** es sich bei der durch die Eingriffe möglichst wenig und im Idealfall überhaupt nicht veränderten, die Fahrdynamik beschreibenden Größe um eine Größe handelt, deren Änderung einen Einfluß auf die Querdynamik des Fahrzeuges hat.

5. Anordnung nach Anspruch 4, **dadurch gekennzeichnet, dass** es sich bei der durch die Eingriffe möglichst wenig und im Idealfall überhaupt nicht veränderten, die Fahrdynamik beschreibenden Größe um die Gierrate (psi) handelt.

6. Anordnung nach Anspruch 2, **dadurch gekennzeichnet, dass** es sich bei den wenigstens zwei verschiedenen Steuerungs- und/oder Regelungssystemen um ein in die Lenkung des Fahrzeugs eingreifendes Steuerungs- und/oder Regelungssystem und ein in die Bremsen des Fahrzeugs eingreifendes Steuerungs- und/oder Regelungssystem handelt.

7. Anordnung nach Anspruch 1, **dadurch gekennzeichnet, dass** die Eingriffe der wenigstens zwei verschiedenen Steuerungs- und/oder Regelungssysteme nur während einer Geradeausfahrt des Fahrzeugs erfolgen.

**8.** Anordnung nach Anspruch 1, **dadurch gekennzeichnet, dass** durch die wenigstens zwei verschiedenen Steuerungs- und/oder Regelungssysteme jeweils wenigstens zwei die Fahrdynamik beeinflussende Eingriffe mit abgestufter Intensität durchgeführt werden.

**9.** Verfahren zur Ermittlung von die Fahrdynamik eines Kraftfahrzeugs beeinflussenden Größen bei Nichtvorliegen gefährlicher Fahrzustände,

- basierend auf einer Anordnung, welche wenigstens zwei verschiedene Steuerungs- und/oder Regelungssysteme enthält, mittels derer unabhängig voneinander und fahrerunabhängig mit Hilfe geeigneter Aktuatoren die Fahrdynamik des Fahrzeugs beeinflussende Eingriffe (302) durchgeführt werden können,
- wobei bei Durchführung eines die Fahrdynamik des Fahrzeugs beeinflussenden Eingriffs durch jeweils ein einziges dieser wenigstens zwei verschiedenen Steuerungs- und/oder Regelungssysteme sich jeweils dieselbe die Fahrdynamik beschreibende Größe durch diesen Eingriff ändert,
- wobei wenigstens zwei der die Fahrdynamik beeinflussenden Eingriffe (302) so durchgeführt werden, dass dieselbe die Fahrdynamik beschreibende Größe (psi) durch die Eingriffe möglichst wenig und im Idealfall überhaupt nicht verändert wird und
- wobei es sich bei den die Fahrdynamik beeinflussenden Größen um Radlasten und/oder Bremsenkennlinien und/oder Reifenkennlinien und/oder Lenkungskenngrößen und/oder Haftreibbeiwerte und/oder Notraderkennung handelt.

**10.** Verfahren nach Anspruch 9, **dadurch gekennzeichnet,**

- **dass** vor der Ermittlung der die Fahrdynamik eines Kraftfahrzeugs beeinflussenden Größen ermittelt wird, ob mit den momentan vorliegenden Stellgrößen im Fahrzeug eine Ermittlung dieser Größen möglich ist und
- für den Fall, dass eine Ermittlung dieser Größen nicht möglich ist und eine Identifikation erforderlich ist (301), die die Fahrdynamik beeinflussenden Eingriffe (302) durchgeführt werden.

**Claims**

**1.** Arrangement for determining parameters which influence the travel dynamics of a motor vehicle, embodied in such a way that these variables are determined when hazardous driving states are not present,

- wherein the arrangement contains at least two different open-loop and/or closed-loop control systems by means of which interventions (302) which influence the travel dynamics of the vehicle can be carried out independently of one another and independently of the driver using suitable actuators,
- wherein, when an intervention (302) which influences the travel dynamics of the vehicle is carried out by in each case a single one of these at least two different open-loop and/or closed-loop control systems, in each case the same parameter (psi) which describes the travel dynamics is changed by this intervention, and
- wherein at least two of the interventions which influence the travel dynamics are carried out by two of these different open-loop and/or closed-loop control systems in such a way that the same parameter (psi) which describes the travel dynamics is changed as little as possible by the interventions, and ideally is not changed at all, and
- wherein the parameters which influence the travel dynamics are wheel loads and/or brake characteristic curves and/or tyre characteristic curves and/or steering characteristic parameters and/or coefficient of friction values and/or emergency wheel detection.

**2.** Arrangement according to Claim 1, **characterized in that** at least two of the following open-loop and/or closed-loop control systems are provided as different open-loop and/or closed-loop control systems, these being specifically

- an open-loop and/or closed-loop control system which intervenes in the brakes,
- an open-loop and/or closed-loop control system which intervenes in the engine,
- an open-loop and/or closed-loop control system which intervenes in the steering of the vehicle,
- an open-loop and/or closed-loop control system which intervenes in the vehicle dampers, and
- an open-loop and/or closed-loop control system which intervenes in the stabilizers.

**3.** Arrangement according to Claim 1, **characterized in that** the at least two interventions which influence the travel dynamics are carried out simultaneously.

4. Arrangement according to Claim 1, **characterized in that** the parameter which is changed as little as possible and ideally not at all by the interventions and which describes the travel dynamics is a parameter whose change influences the lateral dynamics of the vehicle.

5. Arrangement according to Claim 4, **characterized in that** the parameter which is changed as little as possible and ideally not at all by the interventions and which describes the travel dynamics is the yaw rate (psi).

6. Arrangement according to Claim 2, **characterized in that** the at least two different open-loop and/or closed-loop control systems are an open-loop and/or closed-loop control system which intervenes in the steering of the vehicle and an open-loop and/or closed-loop control system which intervenes in the brakes of the vehicle.

7. Arrangement according to Claim 1, **characterized in that** the interventions of the at least two different open-loop and/or closed-loop control systems take place only while the vehicle is travelling straight ahead.

8. Arrangement according to Claim 1, **characterized in that** the at least two different open-loop and/or closed-loop control systems each carry out at least two interventions which influence the travel dynamics, with stepped intensity.

9. Method for determining parameters which influence the travel dynamics of a motor vehicle, when hazardous driving states are not present,

   - on the basis of an arrangement which contains at least two different open-loop and/or closed-loop control systems by means of which interventions (302) which influence the travel dynamics of the vehicle can be carried out independently of one another and independently of the driver using suitable actuators,
   - wherein, when an intervention which influences the travel dynamics of the vehicle is carried out by in each case a single one of these at least two different open-loop and/or closed-loop control systems, in each case the same parameter which describes the travel dynamics is changed by this intervention,
   - wherein at least two of the interventions (302) which influence the travel dynamics are carried out in such a way that the same parameter (psi) which describes the travel dynamics is changed as little as possible by the interventions, and ideally is not changed at all, and
   - wherein the parameters which influence the travel dynamics are wheel loads and/or brake characteristic curves and/or tyre characteristic curves and/or steering characteristic parameters and/or coefficient of friction values and/or emergency wheel detection.

10. Method according to Claim 9, **characterized**

   - **in that**, before the parameters which influence the travel dynamics of a motor vehicle are determined, it is determined whether it is possible to determine these parameters by means of the manipulated variables present in the vehicle at that particular time, and
   - if it is not possible to determine these parameters and if identification is necessary (301), the interventions (302) which influence the travel dynamics are carried out.


**Revendications**

1. Dispositif de détermination de grandeurs influençant la dynamique de marche d'un véhicule automobile, conçu pour déterminer ces grandeurs en l'absence d'états de marche dangereux, dans lequel

   - au moins deux systèmes de commande et de régulation distincts permettent d'effectuer des interventions (302) influençant la dynamique de marche du véhicule indépendamment l'un de l'autre ainsi que du conducteur à l'aide d'actionneurs appropriés,
   - lors de la réalisation d'une intervention (302) influençant la dynamique de marche du véhicule par respectivement un seul de ces deux systèmes de commande et/ou de régulation distincts, la même grandeur (psi) décrivant la dynamique de marche est chaque fois modifiée par cette intervention,
   - au moins deux des interventions influençant la dynamique de marche sont effectuées par deux de ces systèmes de commande et/ou de régulation distincts, pour modifier la même grandeur (psi) décrivant la dynamique de marche aussi peu que possible et idéalement pas du tout, et
   - les grandeurs influençant la dynamique de marche sont des charges de roue et/ou des lignes caractéristiques de freins et/ou des lignes caractéristiques de pneus et/ou des grandeurs caractéristiques de direction et/ou des coefficients d'adhérence pneu/route et/ou l'identification de la roue de secours.

2. Dispositif selon la revendication 1,
**caractérisé en ce que**
les systèmes de commande et/ou de régulation distincts sont au moins deux des systèmes de commande et/ou de régulation suivants, à savoir :

- un système de commande et/ou de régulation intervenant sur les freins,
- un système de commande et/ou de régulation intervenant sur le moteur,
- un système de commande et/ou de régulation intervenant sur la direction du véhicule,
- un système de commande et/ou de régulation intervenant sur les amortisseurs du véhicule,
- un système de commande et/ou de régulation intervenant sur les stabilisateurs.

3. Dispositif selon la revendication 1,
**caractérisé en ce que**
les deux interventions influençant la dynamique de marche sont effectuées simultanément.

4. Dispositif selon la revendication 1,
**caractérisé en ce que**
la grandeur décrivant la dynamique de marche qui est modifiée le moins possible et idéalement pas du tout est une grandeur dont la modification a une influence sur la dynamique transversale du véhicule.

5. Dispositif selon la revendication 4,
**caractérisé en ce que**
la grandeur décrivant la dynamique de marche qui est modifiée le moins possible et idéalement pas du tout est le taux de lacet (psi).

6. Dispositif selon la revendication 2,
**caractérisé en ce que**
les deux systèmes de commande et/ou de régulation distincts sont un système de commande et/ou de régulation intervenant sur la direction du véhicule et un système de commande et/ou de régulation intervenant sur les freins du véhicule.

7. Dispositif selon la revendication 1,
**caractérisé en ce que**
les interventions des au moins deux systèmes de commande et/ou de régulation ne s'effectuent que pendant une marche en ligne droite du véhicule.

8. Dispositif selon la revendication 1,
**caractérisé en ce que**
les deux systèmes de commande et/ou de régulation effectuent chacun au moins deux interventions influençant la dynamique de marche avec une intensité échelonnée.

9. Procédé de détection de grandeurs influençant la dynamique de marche d'un véhicule automobile en l'absence d'états de marche dangereux,

- basé sur un dispositif qui comprend au mois deux systèmes de commande et de régulation distincts permettant d'effectuer des interventions (302) influençant la dynamique de marche du véhicule indépendamment l'un de l'autre ainsi que du conducteur à l'aide d'actionneurs appropriés,
- selon lequel lors de la réalisation d'une intervention influençant la dynamique de marche du véhicule par respectivement un seul de ces deux systèmes de commande et/ou de régulation distincts, la même grandeur (psi) décrivant la dynamique de marche est à chaque fois modifiée par cette intervention, et
- on effectue au moins deux des interventions (302) influençant la dynamique de marche pour modifier la même grandeur (psi) décrivant la dynamique de marche aussi peu que possible et idéalement pas du tout, et
- les grandeurs influençant la dynamique de marche sont des charges de roue et/ou des lignes caractéristiques de freins et/ou des lignes caractéristiques de pneus et/ou des grandeurs caractéristiques de direction et/ou des coefficients d'adhérence pneu/route et/ou l'identification de la roue de secours.

**10.** Procédé selon la revendication 9,
**caractérisé en ce qu'**

- avant la détermination des grandeurs influençant la dynamique de marche d'un véhicule on détermine si les grandeurs de réglage momentanément disponibles dans le véhicule permettent de déterminer ces grandeurs, et
- au cas où une détermination de ces grandeurs n'est pas possible et si une identification est nécessaire (301) on effectue les interventions (302) influençant la dynamique de marche.

Fig. 1

Fig. 2

EP 1 456 068 B1

**306**

t = t + 1

**300**

Identifikation
durchführbar?

no    yes

**301** Identifikation
erforderlich?

no    yes

**302**

Durchführung
kompensierender
Lenk- und
Bremseingriffe

**303**

Identifikation

**304** Sicherheitsmaßnahmen

Adaption
des
Reglers

**305**

Fig. 3

Fig. 4